# EUROPÄISCHE PATENTSCHRIFT

(11) **EP 0 987 299 B1**
(45) Veröffentlichungstag und Bekanntmachung des Hinweises auf die Patenterteilung: **26.07.2006**
(21) Anmeldenummer: 99117993.8
(22) Anmeldetag: 17.09.1999
(51) Int. Cl.: C08L 67/06, C08K 5/14

(54) **Radikalbildner und Phlegmatisierungsmittel enthaltende Zusammensetzungen, Verwendungen und Verfahren zur Herstellung solcher Zusammensetzungen**
Compositions containing radical-generating agents and phlegmatizers, use and process for the preparation of such compositions
Compositions contenant des générateurs de radicaux libres et des agents flegmatisants, utilisation et procédé de préparation de ces compositions

(30) Priorität: 18.09.1998 DE 19842796
(43) Veröffentlichungstag der Anmeldung: 22.03.2000
(73) Patentinhaber: Elf Atochem Deutschland GmbH, 40474 Düsseldorf (DE)
(72) Erfinder: Groepper, Jürgen, 89312 Günzburg (DE)
(74) Vertreter: Morf, Jan Stefan

(56) Entgegenhaltungen:
- WO-A-98/33770
- DE-A- 3 213 946
- US-A- 3 692 841
- CHEMICAL ABSTRACTS, vol. 104, no. 2, 13. Januar 1986 (1986-01-13) Columbus, Ohio, US; abstract no. 7732, XP002126567 & JP 60 139331 A (SANKEN KAKO CO., LTD.) -& DATABASE WPI Week 198536 Derwent Publications Ltd., London, GB; AN 1985-219366 XP002126568 & JP 60 139664 A (SANKEN KAKO CO., LTD.)

## Beschreibung

Die vorliegende Erfindung betrifft Zusammensetzungen in Form einen Lösung, die Radikalbildner und Phlegmatisierungsmittel als Lösungsmittel enthalten, die Lagerung von Radikalbildnern, die Verwendung solchen Zusammensetzungen, die Radikalbildner und Phlegmatisierungsmittel enthalten, für die Härtung von ungesättigten Polyesterharzen und für Polymerisations- und Copolymerisationsreaktionen sowie ein Verfahren zur Herstellung einer Ketonperoxid enthaltenden Zusammensetzung in Form einen Lösung.

Radikalbildner sind chemische Verbindungen, die z.B. durch Einwirken von Wärme, Licht oder Katalysatoren unter homolytischer Bindungsspaltung in Radikale zerfallen und dadurch beispielsweise radikalische Polymerisationen in Gang setzen können. Es ist seit langem bekannt, daß Radikalbildner auch das Härten ungesättigter Polyesterharze auslösen können. Ungesättigte Polyesterharze sind flüssige oder feste Werkstoffe, die aus einer Mischung von langkettigen ungesättigten Polyestern und ungesättigten Monomeren bestehen (vgl. Ullmanns Encyklopädie der technischen Chemie, 4. Auflage, Band 19, Seite 79 bis 80). Als Radikalbildner zum Härten derartiger ungesättigter Polyesterharze finden verschiedenste Peroxyverbindungen, Azonitrile und Azoalkane Anwendung.

Aus der DE-PS 967 265 ist beispielsweise eine Lösung aus ungesättigtem Polyester und Vinylacetat als reaktivem Monomer bekann, die durch Benzoylperoxid ausgehärtet wird.

Die WO 98 33770 beschreibt eine Peroxidzusammensetzung, die eine Kombination aus zwei Phlegmatisierungsmitteln enthält, deren Siedepunkte sich um mindestens 20° C unterscheiden.

In Chemical Abstracts, Bd. 104, Nr. 2, 13. Januar 1986, XP002126567 sind Mikrokapseln aus Bisbenzoylperoxid und einem Polyesterharz beschrieben.

Die DE 35 37 548 A1 beschreibt u.a. eine Zusammensetzung aus einem ungesättigten Polyesterharz und Styrol, zu der eine Mischung verschiedener Azoalkane als Radikalbildner zugegeben wird.

Die Härtung eines ungesättigten, monomerfreien Polyesters durch Dicumylperoxid, d.h. durch ein Peroxid mit einer 10-Stunden-Halbwertszeit-Temperatur von über +74°C, ist aus JP 50-159583 (17. Juni 1974) bekannt.

Aus der US 5 350 797 sind hitzehärtbare Raktionsklebstoffe bekannt, die u.a. neben einem ungesättigten, ggf. styrolfreien Polyester Radikalbildner enthalten, die jedoch 10-Stunden-Halbwertszeit-Temperaturen von über 87°C aufweisen.

Als Radikalbildner zur Härtung von ungesättigten Polyesterharzen werden beispielsweise Ketonperoxide, insbesondere Methylethylketonperoxid, Methylisobutylketonperoxid, Cyclohexanonperoxid und Acetylacetonperoxid, bei Umgebungstemperatur (10 bis 40°C) oder bei erhöhter Temperatur (bis 120°C), gegebenenfalls in Verbindung mit sogenannten Beschleunigern, wie beispielsweise Cobaltoctoat, Eisenoctoat oder Kupferoctoat, eingesetzt. Es ist bekannt, daß Radikalbildner allgemein und insbesondere Ketonperoxide in reiner Form schlagempfindlich und explosiv sind. Insbesondere die Ketonperoxide kommen daher mit Phlegmatisierungsmitteln, beispielsweise Phthalsäureestern, Phosphorsäureestern, Glykolen oder anderen hochsiedenden Lösungsmitteln, auf den Markt. Trotz Verdünnung werden diese handelsüblichen Lösungen von Radikalbildnern bei Transport, Lagerung und Bearbeitung als Gefahrgut eingestuft. Da bei der Verwendung dieser Radikalbildner-Lösungen, beispielsweise zum Härten ungesättigter Polyesterharze, einfachere handwerkliche Verarbeitungsverfahren zum Einsatz kommen, werden häufig ungelernte Arbeitskräfte beschäftigt, was in der Vergangenheit immer wieder durch unsachgemäße Handhabung bei Verarbeitung, Transport oder Lagerung zu zum Teil schweren Unfällen, wie Explosionen mit Toten und Schwerverletzten, Augenverletzungen, Hautverätzungen und Bränden, geführt hat.

Es wäre wünschenswert, die Konzentration der Radikalbildner in den sie enthaltenden Lösungen durch Verdünnung so herabzusetzen, daß sie bei Transport und Lagerung nicht mehr als Gefahrgut gemäß Kraftverkehrsverordnung eingestuft werden müßten, was bei Peroxiden, insbesondere Ketonperoxiden, als Radikalbildner bei einem Aktivsauerstoffgehalt von unter 1% der Fall wäre. Von solchen verdünnten Radikalbildnern ginge bei unsachgemäßem Umgang keine oder nur eine geringe Gefahr aus. Die bekannten Phlegmatisierungsmittel können jedoch für die Herstellung solcher stark verdünnten Radikalbildnerlösungen nicht eingesetzt werden, da aufgrund der niedrigen Radikalbildnerkonzentration relativ große Mengen von beispielsweise 5 bis 20 Gew.-% (bezogen auf die Gesamtzusammensetzung aus ungesättigtem Polyesterharz und Radikalbildnerlösung) dem zu härtenden ungesättigten Polyesterharz zugefügt werden müßten. Daraus würde ein relativ hoher Anteil an Phlegmatisierungsmittel in dem gehärteten Polyesterharz und dadurch unbrauchbare gehärtete Polyesterharze resultieren, die aufgrund des hohen Phlegmatisierungsanteils die von den Harzherstellern vorgegebenen mechanischen, physikalischen und chemischen Eigenschaften nicht mehr erreichen würden.

Die vorliegende Erfindung stellt sich daher die Aufgabe, Radikalbildner in einem Lösungsmittel bereitzustellen, das es erlaubt, einerseits die Radikalbildner in höheren Konzentrationen (von beispielsweise 6 oder 9% Aktivsauerstoff bei Peroxiden) zu lagern und gegebenenfalls zu verwenden und andererseits sie stark zu verdünnen (beispielsweise auf einen Aktivsauerstoffgehalt von kleiner 1% bei Peroxiden, insbesondere Ketonperoxiden) und gegebenenfalls derart verdünnt zu transportieren, ohne daß diese stark verdünnten Radikalbildner ihre Eignung zur Härtung von ungesättigten Polyesterharzen dadurch einbüßen.

Gelöst wird diese Aufgabe durch die Bereitstellung einer Zusammensetzung in Form einen Lösung, die mindestens einen Radikalbildner und mindestens eine Verbindung als Lösungsmittel mit der Teilstruktur I 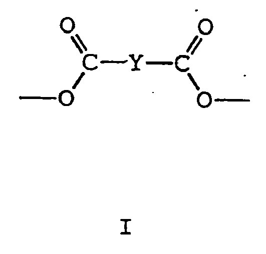 worin Y -HC=CH-, -HC=C(CH₃)- oder -C(=CH₂)-CH₂-, vorzugsweise -HC=CH-, ist, enthält und die dadurch gekennzeichnet ist, daß der Radikalbildner entweder eine 10-Stunden-Halbwertszeit-Temperatur (10-h-HT) von unter +74°C hat oder ein Ketonperoxid ist und daß die Zusammensetzung keine derjenigen Vinyl- oder α-substituierten Vinylverbindungen mit der allgemeinen Formel II

CH₂=CR¹R², II

in denen R¹ und R² unabhängig voneinander Wasserstoff oder ein beliebiger organischer Rest sind, enthält, die in Gegenwart des oder der in der Zusammensetzung enthaltenen Radikalbildner(s) bei einer Temperatur von bis zu ca. 70°C und einem Druck von ca. 1013 mbar mit der oder den in der Zusammensetzung enthaltenen Verbindung(en) mit der Teilstruktur I zu einem gehärteten Polyesterharz oder einem Copolymerisat reagieren, wobei als Verbindungen mit der Teilstruktur I ausgenommen sind monomere Dialkylester der Malein- bzw. Fumarsäure mit 1 bis 20 C-Atomen im Alkylrest und Polyalkylenether mit 1 oder 2 endständigen Maleinsäure- und/ oder Fumarsäuregruppen und einem Molekulargewicht von 6500 bis 25000, wobei die endständige(n) Carbonsäuregruppe(n) gegebenenfalls mit C₁₋₈-Alkyl verestert sein kann/können.

(Aus der DE 32 13 946 A1 ist eine härtbare Polyesterformmasse bekannt, die u.a. eine Polyalkylenethermischpolymerisat-Komponente enthält. Aus der Herstellung dieser Komponente ist u.a. eine Zusammensetzung aus monomerem Dialkylester der Malein- bzw. Fumarsäure mit 1 bis 20 C-Atomen im Alkylrest und Radikalbildnern bekannt, wobei diese Zusammensetzung unmi.t-telbar nach ihrer Herstellung mit Polyalkylenethern mit ein oder zwei ethylenisch ungesättigten Endgruppen zur Bildung der Polyalkylenethermischpolymerisat-Komponente umgesetzt wird. Zur Synthese dieser Komponente wird in der DE 32 13 946 A1 auch eine Zusammensetzung aus Radikalbildnern und einem Polyalkylenether mit 1 oder 2 endständigen Maleinsäure- und/oder Fumarsäuregruppen und einem Molekulargewicht von 6500 bis 25000, wobei die endständige(n) Carbonsäuregruppe(n) gegebenenfalls mit C₁₋₈-Alkyl verestert sein kann/können, beschrieben. Beide Zusammensetzungen dienen nicht der Lagerung oder dem Transport der Radikalbildner, sondern ausschließlich der Herstellung der Mischpolymerisat-Komponente.)

Unerwarteterweise wurde gefunden, daß sich die oben beschriebenen Verbindungen mit der Teilstruktur I, die frei sind von den üblichen, in den ungesättigten Polyesterharzen enthaltenen Monomeren, wie beispielsweise Styrol, trotz ihrer Ungesättigtheit für die Lagerung, die Verdünnung und/oder den Transport von Radikalbildnern eignen. Ein Vorteil der erfindungsgemäßen Zusammensetzung ist dabei, daß Radikalbildner einerseits in hohen Konzentrationen (beispielsweise mit Aktivsauerstoffgehalten von bis zu 9% für Ketonperoxide und andere Peroxide) gelagert werden können. Andererseits können die Radikalbildner in den monomerfreien Verbindungen mit der Teilstruktur I jedoch auch auf Aktivsauerstoffgehalte von kleiner 1% verdünnt werden, ohne daß es zu der bei den üblichen Phlegmatisierungsmitteln beobachteten Verschlechterung der Harzeigenschaften kommt. Die Radikalbildner können daher in dem Lösungsmittel mit der Teilstruktur I in stark verdünnten Lösungen gefahrlos transportiert und vom Endverbraucher eingesetzt werden, wobei schließlich gehärtete Polyesterharze erhalten werden, die nahezu identische mechanische, physikalische und chemische Eigenschaften haben, verglichen mit einem Polyesterharz, das mit einem handelsüblichen Ketonperoxid gehärtet wurde.

Bevorzugt handelt es sich bei der Verbindung mit der Teilstruktur I um einen bei 25°C und 1013 mbar flüssigen ungesättigten Oligo- oder Polyester, der hergestellt werden kann durch Kondensation von Maleinsäure, Fumarsäure, Itaconsäure und/oder Citraconsäure, vorzugsweise Maleinsäure und/oder Fumarsäure, mit einem oder mehreren Diolen der Formel III 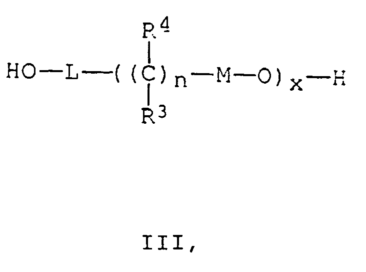 worin n von 1 bis 10, vorzugsweise 2 oder 3 ist, x von 1 bis 100, vorzugsweise 1 bis 10 und insbesondere 1 bis 3 ist, R³ und R⁴ unabhängig voneinander H oder Alkyl mit 1 bis 10 C-Atomen, vorzugsweise 1 oder 2 C-Atomen sind, wobei R³ und/oder R⁴ insbesondere für den Fall, daß n größer als 1 ist, jeweils unabhängig voneinander Wasserstoff oder Alkyl mit 1 bis 10 C-Atomen sein können, und L und M unabhängig voneinander eine Bindung (d.h., L und/oder M fehlen dann, so daß z.B. die HO-Gruppe direkt mit der (CR³R⁴)ₙ-Gruppe verbunden ist) oder Arylen (vorzugsweise mit 6 oder 12 C-Atomen), vorzugsweise Phenylen, insbesondere 1,4-Phenylen, sein können, oder durch Kondensation von Maleinsäure, Fumarsäure, Itaconsäure und/oder Citraconsäure sowie einer oder mehreren Alkyl-, Aryl- und Arylalkyldicarbonsäuren und einem oder mehreren Diolen der Formel III. Wenn n größer 1 ist, kann z.B. einer der Reste R³ und R⁴ H sein und der andere z.B. an einer CH-Gruppe CH₃ und an der nächsten Wasserstoff sein, z.B.: -(CHCH₃-CH₂-O)ₓ-.

Bei den üblicherweise käuflichen Diolen der Formel III handelt es sich beispielsweise um Ethan-1,2-diol, Propan-1,2-diol, Butan-1,3-diol, Butan-1,4-diol, Hexan-1,6-diol, 2,2-Dimethylpropan-1,3-diol, Diethylenglykol, Dipropylenglykol, Diisopropylenglykol, Triethylenglykol, Tripropylenglykol (und deren Polymere) und Bisphenol A.

Bei den Alkyl-, Aryl- und Arylalkyldicarbonsäuren (die käuflich erhältlich oder durch Standardverfahren herstellbar sind) handelt es sich um Verbindungen der Formel HO₂C-X-CO₂H, worin X Alkylen oder Alkenylen mit jeweils 1 bis 20 C-Atomen, vorzugsweise 1 bis 12 C-Atomen, Arylen, Arylenalkylen, Arylendialkylen mit jeweils 6 bis 24 C-Atomen, vorzugsweise 6 oder 12 C-Atomen, und gegebenenfalls Heteroatomen, ausgewählt aus O, N und S, im Arylenteil und 1 bis 6 C-Atomen, vorzugsweise 1 bis 3 C-Atomen, im Alkylenteil ist, wobei jeder der genannten Reste ein- oder mehrfach durch Alkyl mit 1 bis 6 C-Atomen, Alkoxy mit 1 bis 6 C-Atomen, Halogen, Cyano, Nitro, Amino, Mono- oder Di-C₁₋₆-alkylamino substituiert sein kann. Beispiele sind Bernsteinsäure, Glutarsäure, Adipinsäure, Azelainsäure, Sebacinsäure, Phthalsäure, Isophthalsäure und Terephthalsäure.

Üblicherweise ist das Verhältnis von Malein-, Fumar-, Itacon-, Citracon- und/oder sonstigen Säuren zu Diolen der Formel III in den ungesättigten Oligo- oder Polyestern etwa 1 : 1 bis 2 : 1. So kann ein Oligoester eingesetzt werden, der durch Kondensation von 2 Molekülen Maleinsäure oder Fumarsäure mit 1 Molekül Ethylenglykol erhalten wird. Bevorzugt liegt das Molekulargewicht der ungesättigten Oligo- bzw. Polyester zwischen 100 und 2000, insbesondere 200 bis 2000. Insbesondere handelt es sich bei der Verbindung mit der Teilstruktur I um Polyester, die auch als Bestandteil ungesättigter Polyesterharze Anwendung finden. Die Verbindungen mit der Teilstruktur I sind üblicherweise im Handel erhältlich oder können nach bekannten Kondensationsverfahren (s. z.B. P.H. Selden, "Glasfaserverstärkte Kunststoffe 1967", Seiten 18 bis 25) hergestellt werden.

Bei den in der erfindungsgemäßen Zusammensetzung enthaltenen und den für die erfindungsgemäßen Verwendungen eingesetzten Radikalbildnern handelt es sich um die bekannten Radikalbildner, beispielsweise um Ketonperoxide, insbesondere Methylethylketonperoxide, Methylisobutylketonperoxide, Cyclohexanonperoxide, Acetylacetonperoxide oder 3-Methyl-3-hydroxy-5-oxo-1,2-dioxycyclopentane, Peroxyester (mit 10-h-HT von unter +74°C) (z.B. t-Butyl-peroxy-2-ethylhexanoat (10-h-HT = +73°C), t-Butyl-peroxy-3,5,5-trimethylcyclohexan, 4,4-Bis(t-butylper-oxy)-valeriansäure-n-butylester, 3,3-Bis(t-butylperoxy)-buttersäure-ethylester), Dialkylperoxide (mit 10-h-HT von +74°C oder über +74°C), vorzugsweise symmetrisch (z.B. 2,5-Bis(t-butylperoxy)-2,5-dimethylhexan), Alkylhydroperoxide (mit 10-h-HT von +74°C oder über +74°C), Diacylperoxide (mit 10-h-HT von unter +74°C) (z.B. Bis-benzoylperoxid (10-h-HT = +73°C), Peroxyketale (mit 10-h-HT von +74°C oder über +74°C), Azonitrile (mit 10-h-HT von unter +74°C) (z.B. 1,1'-Azo-bis(1-methylcyclohexan), 2,2'-Azobisisobutyronitril (10-h-HT = +64°C)) oder Azoalkane (mit 10-h-HT von +74°C oder über +74°C). Ketonperoxide und Radikalbildner mit 10-h-HT von unter +74°C sind bevorzugt. Ketonperoxide sind besonders bevorzugt.

Alle genannten Radikalbildner können gegebenenfalls substituiert sein, z.B. durch Aryl. Daher umfassen die Dialkyl- und Alkylhydroperoxide z.B. auch die Diaralkyl- und Aralkylhydroperoxide. Soweit diese Radikalbildner nicht käuflich erhältlich sind, können sie nach bekannten Herstellungsverfahren (siehe z.B. Swern, "Organic Peroxides", Bd. 1, 1969, Wiley Interscience, insbesondere Seiten 13 bis 18 und Seite 50; W. Weigert, "Wasserstoffperoxid und seine Derivate", 1978, insbesondere Seite 39 und Seite 49) hergestellt werden.

Wesentlich ist, daß die erfindungsgemäße Zusammensetzung keine derjenigen Vinyl- oder α-substituierten Vinylverbindungen mit der allgemeinen Formel II CH₂=CR¹R² enthält, in denen R¹ und R² unabhängig voneinander Wasserstoff oder ein beliebiger organischer Rest sind und die in Gegenwart des oder der in der Zusammensetzung enthaltenen Radikalbildner(s) bei einer Temperatur von bis zu ca. 70°C und einem Druck von ca. 1013 mbar mit der oder den in der Zusammensetzung enthaltenen Verbindung(en) der Teilstruktur I zu einem gehärteten Polyesterharz oder einem Copolymerisat reagieren. D.h. diejenigen Monomeren, die üblicherweise in ungesättigten Polyesterharzen vorhanden sind, dürfen in den erfindungsgemäßen Zusammensetzungen nicht anwesend sein, da ansonsten deren gewünschte Lagerstabilität nicht gegeben ist. Typische Monomere, die in üblichen ungesättigten Polyesterharzen vorliegen, jedoch in den erfindungsgemäßen Zusammensetzungen nicht vorliegen dürfen, sind Styrol, Divinylbenzol, Vinylacetat, Diallylphthalat, Vinyltoluol, Acryl- und Methacrylsäure und Acryl- und Methacrylsäureester, beispielsweise Methylmethacrylat und Methylacrylat. R¹ in den Verbindungen der Formel II ist daher beispielsweise H oder Methyl, während R² ein gegebenenfalls substituierter Aryl-(z.B. Phenyl-), Acetat-, Carbonsäure- oder Carbonsäureester-Rest ist. Allgemeiner kann R¹ n-C₁₋₁₀-Alkyl (oder auch Alkyl allgemein) oder Aryl sein und R² Wasserstoff oder ein beliebiger organischer Rest. R¹ und/oder R² kann auch ein stickstoff-, sauerstoff-, silicium-, phosphor- oder schwefelhaltiger Rest oder ein Halogenrest sein. Selbstverständlich dürfen all die Verbindungen, die zwar unter die ganz allgemeine Definition der Verbindung der Formel II fallen, die jedoch bei Normaldruck und einer Temperatur von bis zu 70°C nicht in nennenswertem Maße mit der Verbindung I (und dem vorliegenden Radikalbildner) unter Vernetzung reagieren, in den erfindungsgemäßen Zusammensetzungen vorliegen, da dann auch deren Lagerstabilität zumindest in ausreichendem Maße gegeben ist.

Darüber hinaus kann die erfindungsgemäße Zusammensetzung weiterhin Stabilisierungsmittel, insbesondere 2,6-Di-tert.-butyl-4-methylphenol und 4-Nonylphenol, bevorzugt in einer Konzentration von 0,01 bis 10 Gew.-%, bevorzugt 0,01 bis 1 Gew.-% (bezogen auf die Gesamtzusammensetzung), und gegebenenfalls andere übliche Zusätze enthalten.

Es ist bevorzugt, daß, wenn der oder die Radikalbildner in der erfindungsgemäßen Zusammensetzung ein oder mehrere Ketonperoxide sind, der Aktivsauerstoffgehalt der Zusammensetzung 0,5 bis 9%, insbesondere 0,5 bis 1%, beträgt. Enthält die erfindungsgemäße Zusammensetzung als Radikalbildner andere Peroxyverbindungen, so ist es ebenfalls bevorzugt, daß der Aktivsauerstoffgehalt der Zusammensetzung 0,5 bis 9%, insbesondere 0,5 bis 1%, beträgt. Enthält die erfindungsgemäße Zusammensetzung Azoalkane oder Azonitrile als Radikalbildner, so beträgt deren bevorzugte Konzentration in der Zusammensetzung 5 bis 70 Gew.-% (bezogen auf die Gesamtzusammensetzung).

Als geeignet zur Verwendung als Lösungsmittel zur Lagerung und/oder zum Transport von einem oder mehreren der genannten Radikalbildner haben sich neben den bereits erwähnten Verbindungen mit der Teilstruktur I, die in der erfindungsgemäßen Zusammensetzung enthalten sein können, auch die käuflich erhältlichen Dialkylester der Maleinsäure und/oder der Fumarsäure mit verzweigtem oder unverzweigtem C₁₋₂₀₋Alkyl, insbesondere Diethylmaleinat, Di-n-butylmaleinat, Diisobutylmaleinat, Di-t-butylmaleinat, Di-2-ethylhexylmaleinat, Diisodecylmaleinat, Diethylfumarat, Di-n-butylfumarat, Diisobutylfumarat, Di-t-butylfumarat, Di-2-ethylhexylfumarat und Diisodecylfumarat erwiesen. Di-n-butylmaleinat ist bevorzugt. Zusammensetzungen aus diesen letztgenannten Maleinsäure- bzw. Fumarsäureestern und Radikalbildnern sind zwar aus der DE 32 13 946 A1 bekannt (siehe oben), doch wird hier erstmals ihre Verwendung sowie die der weiteren aus der DE 32 13 946 A1 bekannten Polyalkylenether mit endständiger/en Malein- und/oder Fumarsäuregruppe(n) zur Lagerung oder zum Transport von Radikalbildnern beschrieben.

Die Verwendung der Verbindungen mit der Teilstruktur I (einschließlich der Fumar- und Maleinsäuredialkylester) erlaubt es, die Radikalbildner auf einen Aktivsauerstoffgehalt von unter 1% bzw. im Fall der Azoverbindungen auf Konzentration von kleiner 5 Gew.-% (bezogen auf die Gesamtzusammensetzung) zu verdünnen, wobei trotz der durch die Teilstruktur I bedingten Ungesättigtheit überraschenderweise gute Lagerstabilität über Monate bei Raumtemperatur erzielt werden kann. Auch die Lagerung bei Temperaturen über Raumtemperatur, z.B. bei 50°C, über einen längeren Zeitraum hinweg führt nicht zu signifikanter Zersetzung des Radikalbildners im Lösungsmittel. Wird beispielsweise ein Ketonperoxid in einem der genannten Lösungsmittel gelöst und bei 50°C gelagert, so erfolgt über mehrere Tage und Wochen hinweg kein Anstieg der Temperatur der Lösung, was auf die exotherme Zersetzung des Ketonperoxids hinweisen würde. Auch die Abnahme des Peroxidgehalts, bestimmt über den Aktivsauerstoffgehalt, bei Raumtemperatur sowie bei 50°C entspricht ungefähr derjenigen von Lösungen des entsprechenden Ketonperoxids in den üblichen Phlegmatisierungsmitteln. Darüber hinaus ist die Zugabe von üblichen Stabilisierungsmitteln zur verdünnten Lösung der Radikalbildner möglich und hemmt zusätzlich die geringe Zersetzung der Radikalbildner in den verwendeten Lösungsmitteln. Entsprechende Ergebnisse werden auch für andere Radikalbildner, wie Peroxyester, Peroxyketale, Dialkylperoxide, Alkylhydroperoxide, Azonitrile, Azoalkane und Diacylperoxide, gefunden.

Es hat sich als besonders nützlich erwiesen, eine Zusammensetzung in Form einer Lösung, die mindestens einen Radikalbildner mit einer 10-h-HT von unter +74°C und/oder ein Ketonperoxid, mindestens eine Verbindung mit der wie oben definierten Teilstruktur I (einschließlich der Fumar- und Maleinsäuredialkylester) und die keine monomere Verbindung der wie oben definierten Formel II enthält, zur Härtung ungesättigter Polyesterharze einzusetzen, wodurch gehärtete Polyesterharze mit nur geringfügigen Abweichungen der oder identischen mechanischen, physikalischen und chemischen Eigenschaften, verglichen mit einem gehärteten Polyesterharz, das unter Zugabe einer handelsüblichen Radikalbildnerlösung gehärtet wurde, erhalten werden. Dies kann darauf zurückgeführt werden, daß der als Lösungsmittel verwendete Oligo- bzw. Polyester der Teilstruktur I (einschließlich der Fumar- und Maleinsäuredialkylester) in das durch die Härtung gebildete Polyesterharznetzwerk eingebaut wird. Als Folge davon enthält das ausgehärtete Polyesterharz keine ungebundenen Phlegmatisierungsmittel, was insbesondere bei der Verwendung der Harze für Formteile, die in Kontakt mit Lebensmitteln und Trinkwasser kommen, von Vorteil ist, da keine Migration der Phlegmatisiermittel eintreten kann. Darüber hinaus ist es bevorzugt, wenn der in dem ungesättigten Polyesterharz enthaltene Polyester und der als Radikalbildnerlösungsmittel verwendete Oligo- bzw. Polyester (einschließlich der Fumar- und Maleinsäuredialkylester) gleiche Struktureinheiten aufweisen, z.B. daß der Polyester des ungesättigten Polyesterharzes und der Polyester des Radikalbildnerlösungsmittels durch Kondensation von Maleinsäure mit Ethylenglykol gebildet sind.

Die Härtung des ungesättigten Polyesterharzes, das aus einer Lösung von einem oder mehreren ungesättigten Polyestern in einem oder mehreren Monomeren besteht, kann beispielsweise nach einem als Kalthärtung bekannten Verfahren erfolgen. Die Härtung erfolgt dabei durch zeitlich getrennte Zugabe der Lösung eines oder mehrerer Ketonperoxide (mit einem Aktivsauerstoffgehalt von 0,5 bis 9%) in dem geeigneten Lösungsmittel und gegebenenfalls eines Beschleunigers, gegebenenfalls ebenfalls in Lösung, zum ungesättigten Polyesterharz bei Raumtemperatur. Als Beschleuniger können übliche käufliche Metallbeschleuniger verwendet werden, z.B. Vanadiumoctoat, Cobaltoctoat, Cobaltnaphthenat, Eisenoctoat, Kupferoctoat, insbesondere die Cobaltverbindungen, und zwar alleine oder als Gemisch. Die Härtung kommt ohne äußere Wärmezufuhr in Gang und wird als Kalthärtung bezeichnet, obwohl die Temperatur während der Härtung auf über 100°C ansteigen kann. Die Zugabe der Peroxidlösung und des Beschleunigers erfolgt entweder von Hand oder mittels Dosierapparat. Je höher die Konzentration der beiden Komponenten, d.h. je kleiner ihr Volumen, ist, desto schwieriger ist eine genaue Dosierung, insbesondere bei Anwendung eines Dosierapparates. Die erfindungsgemäße Verwendung einer Verbindung der wie oben definierten Teilstruktur I (einschließlich der Fumar- und Maleinsäuredialkylester) als Lösungsmittel des Ketonperoxids ermöglicht eine Verdünnung des Ketonperoxids auf einen Aktivsauerstoffgehalt von unter 1%. Die hohe Verdünnung des Ketonperoxids im Lösungsmittel gestattet nunmehr, größere Volumina der Ketonperoxidlösung zu dem zu härtenden Polyesterharz zuzugeben. Dies bedeutet umgekehrt eine Erleichterung der genauen Dosierung des Peroxids. So können bei einem Aktivsauerstoffgehalt von unter 1% Ketonperoxidlösungen in einer Verbindung mit der wie oben definierten Teilstruktur I (einschließlich der Fumar- und Maleinsäuredialkylester) in Mengen von etwa 5 bis 20 Gew.-% (bezogen auf die Gesamtzusammensetzung) zu dem zu härtenden Polyesterharz zugegeben werden. Würden vergleichbare Mengen herkömmlicher Ketonperoxidlösungen in den üblichen Phlegmatisierungsmitteln dem ungesättigten Polyesterharz zur Härtung zugesetzt werden, so resultierten für die weitere Verarbeitung unbrauchbare gehärtete Polyesterharze mit schlechten mechanischen, physikalischen und chemischen Eigenschaften. Die Möglichkeit, das Ketonperoxid (bzw. andere Radikalbildner) in hoher Verdünnung zur Härtung ungesättigter Polyesterharze zu verwenden, führt außerdem dazu, daß die Homogenisierung in statischen und dynamischen Mischern bei einem Verhältnis von ungesättigtem Polyesterharz zu Peroxid von etwa 80 : 20 wesentlich besser und genauer erfolgen kann als bei einem Verhältnis von 99 : 1, wie dies bei den bislang üblichen hochkonzentrierten Ketonperoxid-(bzw. Radikalbildner)-Lösungen der Fall ist.

Für die Kalthärtung bei etwa 10° bis 40°C Anfangstemperatur sind beispielsweise Ketonperoxide, z.B. Methylethylketonperoxide, Methylisobutylketonperoxide, Cyclohexanonperoxid, Acetylacetonperoxid oder 3-Methyl-3-hydroxy-5-oxo-1,2-dioxycyclopentan, sowie Dibenzoylperoxid in Kombination mit Aminbeschleunigern (z.B. N,N-Dimethylanilin) geeignet.

Die für die Kalthärtung verwendeten Metallbeschleuniger können in den gleichen Lösungsmitteln wie die zur Härtung verwendeten Ketonperoxide oder in anderen geeigneten Lösungsmitteln, wie z.B. Xylol, Styrol, Diisobutylphthalat, gelöst werden; dabei ist letzteres bevorzugt, weil das Volumen der Beschleunigerlösung erheblich geringer ist als das Volumen der Radikalbildnerlösung, so daß das Lösungsmittel der Beschleunigerlösung keinen negativen Einfluß auf die Eigenschaften des gehärteten Polyesterharzes hat.

Alternativ zum Kalthärtungsverfahren können ungesättigte Polyesterharze auch nach einem als Warm- bzw. Heißhärtung bekannten Verfahren gehärtet werden. Hierfür finden insbesondere Peroxyester, Diacylperoxide und Azonitrile Verwendung, wobei die Peroxide mit Aktivsauerstoffgehalten von 0,5 bis 9% eingesetzt werden können. Hierbei muß die Mischung aus ungesättigtem Polyesterharz und Radikalbildnerlösung zum Zwecke der Härtung durch äußere Wärmezufuhr (Anfangstemperatur z.B. 80 bis 100°C) aufgeheizt werden. Bei der Verwendung von Peroxyestern als Radikalbildner zur Härtung von ungesättigten Polyesterharzen können ebenfalls zur Verkürzung der Härtezeit die oben beschriebenen Metallbeschleuniger, insbesondere Cobaltbeschleuniger, verwendet werden.

Ungesättigte Polyesterharze, welche durch Radikalbildner gehärtet werden, sind z.B.: Lösungen von Kondensaten aus Dicarbonsäuren und Diolen in polymerisierbaren ungesättigten Monomeren (z.B. Styrol, (Methyl)methacrylat, Methylacrylat, Vinyltoluol, Vinylacetet, Diallylphthalat). Diese Kondensate werden hergestellt durch Umsetzung von
a) Maleinsäure und/oder Fumarsäure mit einem oder mehreren Diol(en) (z.B. Ethan-1,2-diol, Propan-1,2-diol, Butan-1,3-diol, Hexan-1,6-diol, 2,2-Dimethyl-propan-1,3-diol, Bishphenol A),
b) Maleinsäure und/oder Fumarsäure und einer oder mehreren gesättigten Dicarbonsäure(n) (z.B. Bernsteinsäure, Glutarsäure, Adipinsäure, Azelainsäure, Sebacinsäure, Phthalsäure, Isophthlsäure, Terephthalsäure) mit einem oder mehreren Diol(en) (z.B. Ethan-1,2-diol, Propan-1,2-diol, Butan-1,3-diol, Hexan-1,6-diol, 2,2-Dimethyl-propan-1,3-diol, Bisphenol A),
c) einer oder mehreren gesättigten Dicarbonsäuren und Methacrylsäure mit gesättigten Diolen, dergestalt, daß sich die Methacrylsäure lediglich am Anfang und am Ende der Polyesterkette befindet. (Analog kann sich auch Cyclopentadien am Anfang oder Ende der Polyesterkette befinden.)

Neben den bereits erwähnten Ketonperoxiden finden als Radikalbildner Peroxyester, z.B. t-Butylperoxy-2-ethylhexanoat, t-Butyl-peroxy-3,5,5-trimethylcyclohexan, 4,4-Bis(t-butyl-peroxy)-valeriansäure-n-butylester, 3,3-Bis(t-butylperoxy)-buttersäure-ethylester und t-Butyl-peroxybenzoat, Peroxyketale, z.B. Bis(t-butylperoxy)-3,5,5-trimethylcyclohexan und Bis(t-butylperoxy)-cyclohexan, Diaralkylperoxide, Dialkylperoxide, z.B. 2,4-Bis(t-butylperoxy)-2,4-dimethylhexan und 2,5-Bis(t-butylperoxy)-2,5-dimethylhexan, Alkylhydroperoxide, z.B. t-Butylhydroperoxid, 2,5-Dimethyl-2,5-dihydroperoxyhexan, t-Amylhydroperoxid und p-Menthanhydroperoxid, Aralkylhydroperoxide, z.B. Cumylhydroperoxide und 1,3-Diisopropylbenzolmono- und -dihydroperoxid, Azonitrile, z.B. 1,1'-Azo-bis(1-methylcyclohexan) und Azoisobutyronitril (AIBN), Azoalkane und Diacylperoxide, z.B. Dibenzoylperoxid, Dilauroylperoxid, Diacetylperoxid und Diisononanoylperoxid, Verwendung.

Lösungen von Radikalbildnern mit einer 10-h-HT von unter +74°C und/oder ein Ketonperoxid in einer oder mehreren Verbindungen mit der wie oben definierten Teilstruktur I (einschließlich der Fumar- und Maleinsäuredialkylester) können auch als Initiatoren für Polymerisationen, Copolymerisationen und Pfropfpolymersationen sowie zur Vernetzung von Polymeren und/oder Copolymeren und beliebigen anderen Monomeren verwendet werden.

Lösungen von Radikalbildnern in Verbindungen mit der wie oben definierten Teilstruktur I (einschließlich der Fumar- und Maleinsäuredialkylester) können in herkömmlicher Weise hergestellt werden, z.B. durch Lösen des zuvor hergestellten Radikalbildners und gegebenenfalls weiterer vorhandener Bestandteile, wie z.B. Stabilisierungsmittel, in dem betreffenden Lösungsmittel. (Die Verbindungen mit der Teilstruktur I (einschließlich der Fumar- und Maleinsäuredialkylester) werden hier häufig als Lösungsmittel bezeichnet, da die bevorzugten Verbindungen bei Normalbedingungen flüssig sind.

Im Fall der Ketonperoxide können diese auch in situ in der Verbindung mit der Teilstruktur I (einschließlich der Fumar- und Maleinsäuredialkylester) hergestellt werden, indem das entsprechende Keton in der Verbindung mit der Teilstruktur I (einschließlich der Fumar- und Maleinsäuredialkylester) gelöst wird und anschließend in dieser Lösung in das gewünschte Ketonperoxid überführt wird. Dies kann beispielsweise durch Zugabe einer sauren Lösung von Wasserstoffperoxid zur Lösung eines Ketons in einer Verbindung mit der Teilstruktur I (einschließlich der Fumar- und Maleinsäuredialkylester), anschließende Neutralisierung, Abtrennung der wäßrigen Phase, Trocknung der organischen Phase und gegebenenfalls weitere Verdünnung der Ketonperoxidlösung durchgeführt werden. Die so hergestellten Ketonperoxidlösungen ergeben bei Verwendung zur Härtung ungesättigter Polyesterharze verringerte Mengen migrierender und verdampfender TOCs (TOC = Gesamtmenge extrahierbarer oder flüchtiger organischer Kohlenwasserstoffverbindungen) im gehärteten Polyesterharz, was zu geringeren Umweltbelastungen durch derartige Verbindungen bei Anwendungen der gehärteten Polyesterharze im Lebensmittel- und Trinkwasserbereich sowie bei Gegenständen des Haushalts und in Kraftfahrzeugen führt.

Bei der Herstellung von Lösungen von Radikalbildnern in Verbindungen mit der wie oben definierten Teilstruktur I (einschließlich der Fumar- und Maleinsäuredialkylester) sowie bei ihrer Handhabung, Verwendung und Verdünnung sind die üblichen Vorsichtsmaßnahmen für den Umgang mit Radikalbildnern zu beachten, wie sie z.B. für den Umgang mit organischen Peroxiden in der Firmenschrift "Safe Handling of Organic Peroxides" der Firma Elf Atochem beschrieben sind. Insbesondere ist darauf zu achten, daß Verunreinigungen der verwendeten Chemikalien, Werkstoffe und Geräte möglichst ausgeschlossen sind.

Die vorliegende Erfindung wird durch folgende Beispiele erläutert:

### BEISPIELE:

### Testverfahren

Aktivsauerstoffgehalte wurden iodometrisch durch Titration mit Natriumthiosulfat-Lösung bestimmt. 10-h-HT, d.h. die Temperatur, bei der sich innerhalb von 10 h 50% des Peroxids zersetzen, kann ebenfalls iodometrisch durch Titration mit Natriumthiosulfat-Lösung bestimmt werden.

Barcol-Härte wurde mit dem Barcol-Impressor gemessen.

Viskositäten wurden bestimmt mit einem Haake Rotationsviskosimeter.

### Verwendete Verbindungen

MEKP I: Methylethylketonperoxid Luperox GZ-S der Firma Elf Atochem mit einem Aktivsauerstoffgehalt von etwa 9,2% und etwa 0,7 Teilen Wasserstoffperoxid, etwa 6,6 Teilen monomeren, etwa 1,8 Teilen dimeren und etwa 0,06 Teilen trimeren Methylethylketonperoxiden.

MEKP II: Methylethylketonperoxid Luperox SP55 der Firma Elf Atochem mit einem Aktivsauerstoffgehalt von etwa 9,8% und etwa 1,1 Teilen Wasserstoffperoxid, etwa 6,9 Teilen monomeren, etwa 1,8 Teilen dimeren und etwa 0,05 Teilen trimeren Methylethylketonperoxiden.

Polyester I: Lösungsmittelfreier ungesättigter Polyester POLIPLAST UP 079 der Firma Carlo Ricco' & Fratelli S.p.A. mit einer Viskosität von 350 bis 400 mPas, einem Molekulargewicht von 1110, einer Dichte bei 20°C von 1,085 bis 1,095 kg/Liter und einer Säurezahl von < 25 mg KOH/g.

Polyester II: Monomerfreies mittelviskoses ungesättigtes Polyesterharz auf Basis von Maleinsäureanhydrid und Glykolen mit der Handelsbezeichnung Sconaran® UP-MH0 S2 der BSL (Buna Sow Leuna, Merseburg, BRD) mit einer Viskosität von 150 bis 300 mPas (nach DIN 53015), einem mittleren Molekulargewicht von etwa 800, einer Säurezahl von < 15 mg KOH/g (nach DIN 53402), einer Farbzahl von < 150 (nach DIN 53409) und einem Brechungsindex bei 20°C von 1,453 bis 1,458 (nach DIN 51423).

Ungesättigtes Polyesterharz Palatal P6: Dieses hochreaktive Polyesterharz ist ein ungesättigter Polyester auf Isophthalsäurebasis in Styrol und ist von der Firma BASF unter dem Namen Palatal P6 erhältlich. Viskosität: 1000 mPas (nach DIN 53019), Styrolmassenanteil 34% (nach DIN 16945, 4.14).

Ungesättigtes Polyesterharz Palatal P4: Dieses mittelreaktive Polyesterharz ist ein ungesättigter Polyester auf Orthophthalsäurebasis in Styrol und ist von der Firma BASF unter dem Namen Palatal P4 erhältlich.
Viskosität: 650 mPas (nach DIN 53019), Styrolmassenanteil 35% (nach DIN 16945, 4.14).

### BEISPIEL 1

### A)

### Stabilitätstest der Radikalbildner bei 20°C nach 3 Monaten:

Die Radikalbildner wurden im jeweiligen Lösungsmittel auf jeweils 1 : 1 verdünnt. Der Aktivsauerstoffgehalt wurde zu Beginn und nach 3 Monaten bestimmt und die Abnahme vom Anfangsgehalt in Prozent berechnet. Die Ergebnisse sind in Tabelle 1 wiedergegeben:

**Tabelle 1**

| **Peroxid** | **Stabilisator** | **Anfangsaktivsauerstoff** | **Aktivsauerstoff nach 3 Monaten** | **Verlust in % vom Anfangsgehalt** |
|---|---|---|---|---|
| MEKP I in Diib | - | 4,64% | 4,66% | 0% |
| MEKP II in Diib | - | 4,92% | 4,93% | 0% |
| AAP in DAA | - | 1,83% | 1,83% | 0% |
| MEKP I in Polyester I | - | 4,64% | 4,61% | 0,6% |
| MEKP II in Polyester I | - | 4,91% | 4,89% | 0,2% |
| AAP in Polyester I | - | 1,84% | 1,85% | 0% |
| MEKP I in | 0,25% BHT | 4,49% | 4,48% | 0,2% |
| Polyester I | 0,25% 4-Non | | | |
| MEKP II in | 0,25% BHT | 4,83% | 4,85% | 0% |
| Polyester I | 0,25% 4-Non | | | |
| AAP in Poly- | 0,25% BHT | 1,88% | 1,81% | 3,7% |
| ester I | 0,25% 4-Non | | | |
| MEKP I in Polyester II | - | 4,56% | 4,57% | 0% |
| MEKP II in Polyester II | - | 4,82% | 4,83% | 0% |
| AAP in Polyester II | - | 1,86% | 1,87% | 0% |

| | | | | |
|---|---|---|---|---|
| Diib = Diisobutylphthalat (Phlegmatisierungsmittel des Stands der Technik) | | | | |
| AAP = Acetylacetonperoxid | | | | |
| DAA = Diacetonalkohol = 4-Hydroxy-4-methyl-2-pentanon (Phlegmatisierungsmittel des Stands der Technik) | | | | |
| BHT = 2,6-Di-tert.-butyl-4-methylphenol | | | | |
| 4-Non = 4-Nonylphenol | | | | |

### B)

### Reaktivitätstest:

Die in Tabelle 1 wiedergegebenen Radikalbildnermischungen wurden nach ihrer Herstellung bzw. 3 Monate nach ihrer Herstellung dem hochreaktiven ungesättigten Polyesterharz Palatal P6 unter Kalthärtungsbedingungen zugesetzt. Es wurde eine 2 gew.-%ige Radikalbildnerlösung und eine 1%ige Cobaltoctoatbeschleunigerlösung in Diisobutylphthalat bei einer Anfangstemperatur von 20°C ± 1 verwendet. Es wurden die Gel- und Härtezeiten sowie die maximal erreichte Reaktionstemperatur (Peak) und die Barcolhärte zur Bewertung der mechanischen Eigenschaften des gehärteten Polyesterharzes bestimmt. Die Ergebnisse sind in Tabelle 2 wiedergegeben:

**Tabelle 2**

| | **Anfangsreaktivität** | | | **Reaktivität nach 3 Monaten** | | | |
|---|---|---|---|---|---|---|---|
| **Peroxid** | **Gelzeit [Min:Sec]** | **Härtezeit [Min:Sec]** | **Peak °C** | **Gelzeit [Min:Sec]** | **Härtezeit [Min:Sec]** | **Peak °C** | **Barcol-Härte nach 24 h** |
| MEKP I in Diib | 17:45 | 28:20 | 153°C | 14:36 | 23:34 | 157°C | 38-40 |
| MEKP II in DMP | 9:20 | 16:26 | 165°C | 7:27 | 13:53 | 169°C | 37-41 |
| AAP in DAA | 12:15 | 16:17 | 162°C | 10:00 | 13:35 | 177°C | 39-42 |
| MEKP I in Polyester I | 15:50 | 26:13 | 156°C | 12:32 | 21:29 | 165°C | 42-45 |
| MEKP II in Polyester I | 9:18 | 16:12 | 159°C | 7:45 | 14:43 | 162°C | 43-46 |
| AAP in Polyester I | 15:00 | 18:37 | 171°C | 14:44 | 18:25 | 170°C | 44-47 |
| MEKP I in Polyester II | 19:53 | 31:31 | 147°C | 16:42 | 27:30 | 148°C | 42-45 |
| MEKP II in Polyester II | 11:18 | 19:19 | 158°C | 9:16 | 16:24 | 161°C | 42-45 |
| AAP in Polyester II | 14:18 | 18:29 | 160°C | 13:00 | 17:00 | 163°C | 43-46 |

Alle verdünnten Ketonperoxide zeigen nach 3 Monaten eine leicht erhöhte Reaktivität. Die gemessene Barcol-Härte ist bei Verwendung von erfindungsgemäßen verwendeten Lösungsmitteln höher als bei Verwendung von herkömmlichen Phlegmatisierungsmitteln.

### BEISPIEL 2

### Stabilitätstest bei 50°C für 5 Tage:

Die in Tabelle 3 angegebenen Radikalbildner wurden mit Diisobutylphthalat bzw. Polyester I im Verhältnis 1 : 1 verdünnt. Der Aktivsauerstoffgehalt sowie die Viskosität der Lösungen wurde nach Vermischen und nach 5 Tagen bei 50°C bestimmt. Die Ergebnisse sind in Tabelle 3 wiedergegeben:

**Tabelle 3**

| Peroxid | Anfangsaktivsauerstoffgehalt | nach 5 Tagen | Verlust in % vom Anfangsgehalt | Viskosität in mPas | |
|---|---|---|---|---|---|
| | | | | davor | danach |
| t-Butylperoctoat in Diib | 3,65% | 3,17% | 13,15% | 22 | 27 |
| t-Butylperoctoat in Polyester I | 3,65% | 3,15% | 13,7% | 308 | 305 |
| t-Butylperbenzoat in Diib | 4,1% | 4,1% | 0% | 20 | 20 |
| t-Butylperbenzoat in Polyester I | 4,1% | 4,05% | 1,2% | 302 | 303 |
| 1,1-Di-butyl-peroxycyclohexan in Diib | 3,1% | 3,03% | 2,26% | 23 | 22 |
| 1,1-Di-butyl-peroxycyclohexan in Polyester I | 3,1% | 3,02% | 2,6% | 305 | 303 |
| Benzoylperoxidpaste in Diib | 1,65% | 1,59% | 3,5% | - | - |
| Benzoylperoxidpaste in Polyester I | 1,65% | 1,61% | 2,4% | - | - |

Die Viskositätsmessungen zeigen, daß keine Polymerisation der verwendeten Lösungsmittel durch die gelösten Radikalbildner initiiert wurde.

### BEISPIEL 3

### A)

### Herstellung von Methylethylketonperoxiden direkt im Polyester II:

Eine Lösung von 173 g 70%igem Wasserstoffperoxid, 69 g Weichwasser (= mit einem Ionenaustauscher hergestelltes deionisiertes Wasser) und 21 g 78%iger Schwefelsäure wurde zu einer in einem Stahlbecher befindlichen Lösung aus 100 g Polyester II und 176 g Methylethylketon bei -1 bis +1°C innerhalb von 25 bis 30 Minuten zulaufen gelassen, wobei intensiv gerührt wurde. Es wurde 45 Minuten bei 0°C nachgerührt. Das Reaktionsgemisch wurde mit 160 g einer 30%igen Na₃PO₄-Lösung neutralisiert und die wäßrige Phase abgetrennt. Die organische Phase wurde mit 25 g Natriumsulfat getrocknet. Es wurden ca. 440 g Methylethylketonperoxide in Polyester II mit 10,8% Aktivsauerstoffgehalt mit Polyester II auf die angegebenen Aktivsauerstoffgehalte herunterverdünnt.

### B)

Nach der gleichen Methode wie in Beispiel 3 A) wurde eine Methylethylketonperoxidlösung unter Verwendung von Dibutylmaleinat als Lösungsmittel hergestellt und auf 9% Aktivsauerstoffgehalt eingestellt.

### C)

Zum Vergleich wurde ein Methylethylketonperoxid nach der gleichen Methode wie in Beispiel 3 A) unter Verwendung von Dimethylphthalat (= DMP) als Phlegmatisierungsmittel hergestellt und auf 9% Aktivsauerstoffgehalt eingestellt.

### Stabilitätstest:

Der Aktivsauerstoffgehalt wurde nach Herstellung der Mischungen und nach 5 Tagen bei 50°C bestimmt. Die Ergebnisse sind in Tabelle 4 wiedergegeben und zeigen, daß das verwendete MEKP in dem erfindungsgemäß verwendeten Lösungsmittel über eine vergleichbare Stabilität verfügt wie in Phlegmatisierungsmitteln des Stands der Technik.

**Tabelle 4**

| | **Anfangsaktivsauerstoffgehalt** | **nach 5 Tagen** | **Verlust in % vom Anfangsgehalt** |
|---|---|---|---|
| MEKP in DMP | 9% | 8,79% | 2,27% |
| MEKP in Dibutylmaleinat | 9% | 8,7% | 3,3% |
| MEKP in Polyester II | 9% | 8,73% | 3% |
| MEKP in Polyester II | 4,5% | 4,32% | 3,35% |

### D)

### Reaktivitätsvergleich:

Die unter A)-C) hergestellten MEKP-Lösungen wurden zum Härten ungesättigter Polyesterharze in Styrol unter Kalthärtungsbedingungen bei 20°C verwendet. Die Ergebnisse sind in Tabelle 5 wiedergegeben und zeigen, daß die in dem erfindungsgemäß verwendeten Lösungsmittel hergestellten MEKPs und die in Phlegmatisierungsmitteln des Stands der Technik hergestellten MEKPs vergleichbare Reaktivität aufweisen.

**Tabelle 5**

| **Palatal P4** | **Anfangsaktivsauerstoff** | **Menge [Gew.-%]*** | **Gelzeit in Min.** | **Härtezeit in Min.** | **Peakexotherm** |
|---|---|---|---|---|---|
| MEKP/DMP | 9% | 2% | 27 | 45 | 118,3°C |
| MEKP/Maleinat | 9% | 2% | 28 | 47 | 119°C |
| MEKP/Polyester II | 9% | 2% | 25 | 42 | 123°C |
| MEKP/Polyester II | 4,5% | 4% | 26 | 43 | 122°C |

| **Palatal P6** | **Anfangsaktivsauerstoff** | **Menge [Gew.-%]*** | **Gelzeit in Min.** | **Härtezeit in Min.** | **Peakexotherm** |
|---|---|---|---|---|---|
| MEKP/DMP | 9% | 2% | 18 | 25 | 173°C |
| MEKP/Maleinat | 9% | 2% | 19 | 26 | 170°C |
| MEKP/Polyester II | 9% | 2% | 17 | 23 | 173°C |
| MEKP/Polyester II | 4,5% | 4% | 18 | 25 | 175°C |

| | | | | | |
|---|---|---|---|---|---|
| * : Menge an Peroxid in Gew.-%, bezogen auf die Gesamtzusammensetzung. | | | | | |

## Patentansprüche

1. Zusammensetzung in Form einer Lösung, die enthält
mindestens einen Radikalbildner und
mindestens eine Verbindung als Lösungsmittel mit der Teilstruktur I 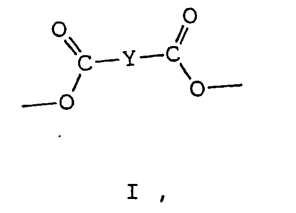 worin Y -HC=CH-, -HC=C(CH₃)- oder -C(=CH₂)-CH₂- ist, **dadurch gekennzeichnet, daß** der Radikalbildner eine 10-Stunden-Halbwertszeit-Temperatur von unter +74°C hat und/oder ein Ketonperoxid ist und daß die Zusammensetzung keine derjenigen Vinyl- oder α-substituierten Vinylverbindungen mit der allgemeinen Formel II
CH₂=CR¹R², II
in denen R¹ und R² unabhängig voneinander Wasserstoff oder ein beliebiger organischer Rest sind, enthält, die in Gegenwart des oder der in der Zusammensetzung enthaltenen Radikalbildner(s) bei einer Temperatur von bis zu ca. 70°C und einem Druck von ca. 1013 mbar mit der oder den in der Zusammensetzung enthaltenen Verbindung(en) mit der Teilstruktur I zu einem gehärteten Polyesterharz oder einem Copolymerisat reagieren, wobei als Verbindungen mit der Teilstruktur I ausgenommen sind monomere Dialkylester der Malein- bzw. Fumarsäure mit 1 bis 20 C-Atomen im Alkylrest und Polyalkylenether mit 1 oder 2 endständigen Maleinsäure- und/oder Fumarsäuregruppen und einem Molekulargewicht von 6500 bis 25000, wobei die endständige(n) Carbonsäuregruppe(n) gegebenenfalls mit C₁₋₈-Alkyl verestert sein kann/können.

2. Zusammensetzung nach Anspruch 1, **dadurch gekennzeichnet, daß** die Verbindung mit der Teilstruktur I ein bei 25 °C und 1013 mbar flüssiger ungesättigter Oligo- oder Polyester ist, der hergestellt werden kann durch Kondensation von Maleinsäure, Fumarsäure, Itaconsäure und/oder Citraconsäure mit einem oder mehreren Diolen der Formel III 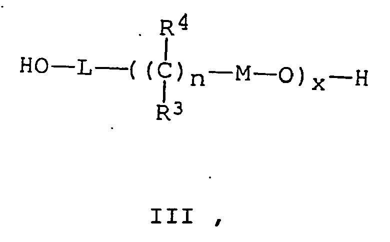 worin n von 1 bis 10 ist, x von 1 bis 100 ist, R³ und R⁴ unabhängig voneinander H oder Alkyl mit 1 bis 10 C-Atomen sind und L und M unabhängig voneinander eine Bindung oder Arylen sind,
oder durch Kondensation von Maleinsäure, Fumarsäure, Itaconsäure und/oder Citraconsäure sowie einer oder mehreren Alkyl-, Aryl- und Arylalkyldicarbonsäuren mit einem oder mehreren Diolen der Formel III.

3. Zusammensetzung nach einem der Ansprüche 1 oder 2, **dadurch gekennzeichnet, daß** die Zusammensetzung weiterhin ein Stabilisierungsmittel, insbesondere 2,6-Di-tert.-butyl-4-methylphenol oder 4-Nonylphenol, bevorzugt in einer Konzentration von 0,01 bis 10 Gew.-%, bezogen auf die Gesamtzusammensetzung, und gegebenenfalls andere übliche Zusätze enthält.

4. Zusammensetzung nach einem der Ansprüche 1 bis 3, **dadurch gekennzeichnet, daß** der oder die Radikalbildner ein oder mehrere Ketonperoxide, bevorzugt ein oder mehrere Methylethylketonperoxide, Methylisobutylketonperoxide, Cyclohexanonperoxide, Acetylacetonperoxide oder 3-Methyl-3-hydroxy-5-oxo-1,2-dioxycyclopentane, der Peroxyester t-Butyl-peroxy-2-ethyl-hexanoat und/oder das Diacylperoxid Bis-benzoylperoxid sind.

5. Zusammensetzung nach einem der Ansprüche 1 bis 3, **dadurch gekennzeichnet, daß** der oder die Radikalbildner ein oder mehrere Azonitrile sind.

6. Zusammensetzung nach Anspruch 4, **dadurch gekennzeichnet, daß** der Aktivsauerstoffgehalt der Zusammensetzung 0,5 bis 9%, insbesondere 0,5 bis 1%, beträgt.

7. Verwendung einer oder mehrerer Verbindungen mit der Teilstruktur I 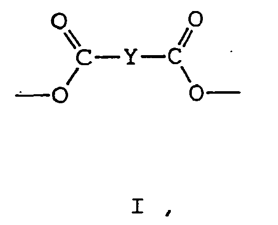 worin Y -HC=CH-, -HC=C(CH₃)- oder -C(=CH₂)-CH₂- ist, als Lösungsmittel zur Lagerung und/oder zum Transport von einem oder mehreren Radikalbildnern, wobei als Verbindungen mit der Teilstruktur I ausgenommen sind monomere Dialkylester der Malein- bzw. Fumarsäure mit 1 bis 20 C-Atomen im Alkylrest und Polyalkylenether mit 1 oder 2 endständigen Maleinsäure- und/oder Fumarsäuregruppen und einem Molekulargewicht von 6500 bis 25000, wobei die endständige(n) Carbonsäuregruppe(n) gegebenenfalls mit C₁₋₈-Alkyl verestert sein kann/können.

8. Verwendung nach Anspruch 7, **dadurch gekennzeichnet, daß** die Verbindung mit der Teilstruktur I ein bei 25 °C und 1013 mbar flüssiger ungesättigter Oligo- oder Polyester ist der hergestellt werden kann durch Kondensation von Maleinsäure, Fumarsäure, Itaconsäure und/oder Citraconsäure mit einem oder mehreren Diolen der Formel III 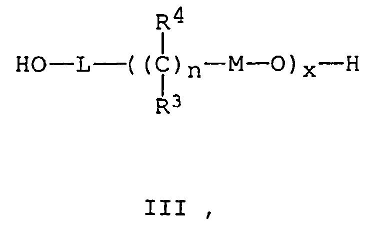 worin n von 1 bis 10 ist, x von 1 bis 100 ist, R³ und R⁴ unabhängig voneinander H oder Alkyl mit 1 bis 10 C-Atomen sind und L und M unabhängig voneinander eine Bindung oder Arylen sind, oder durch Kondensation von Maleinsäure, Fumarsäure, Itaconsäure und/oder Citraconsäure mit einer oder mehreren Alkyl-, Aryl- und Arylalkyldicarbonsäuren und einem oder mehreren Diolen der Formel III.

9. Verwendung nach einem der Ansprüche 7 oder 8, **dadurch gekennzeichnet, daß** der oder die Radikalbildner ein oder mehrere Ketonperoxide, Peroxyester, Dialkylperoxide, einschließlich Diaralkylperoxide, Alkylhydroperoxide, einschließlich Aralkylhydroperoxide, Diacylperoxide, Peroxyketale, Azonitrile und/oder Azoalkane sind.

10. Verwendung nach Anspruch 9, wobei der Aktivsauerstoffgehalt des/der Ketonperoxide, Peroxyester, Dialkylperoxide, Alkylhydroperoxide, Diacylperoxide und/oder Peroxyketale 0,5 bis 9%, insbesondere 0,5 bis 1%, beträgt.

11. Verwendung einer Zusammensetzung gemäß Anspruch 1 zur Härtung ungesättigter Polyesterharze.

12. Verwendung nach Anspruch 11, **dadurch gekennzeichnet, daß** die in der verwendeten Zusammensetzung enthaltene(n) Verbindung(en) mit der Teilstrukur I und der in dem ungesättigten Polyesterharz enthaltene ungesättigte Polyester gleiche Stuktureinheiten aufweisen.

13. Verwendung einer Zusammensetzung nach Anspruch 11 oder 12, **dadurch gekennzeichnet, daß** der oder die verwendeten Radikalstarter ein oder mehrere Ketonperoxide sind und die Härtung bei 10 bis 40°C, gegebenenfalls in Gegenwart eines oder mehrerer Metallbeschleuniger, initiiert wird.

14. Verwendung nach Anspruch 13, **dadurch gekennzeichnet, daß** der Metallbeschleuniger Vanadium-, Eisen-, Kupfer- oder Cobaltoctoat oder Cobaltnaphthenat ist.

15. Verwendung einer Zusammensetzung nach Anspruch 11 oder 12, **dadurch gekennzeichnet, daß** als der oder die Radikalbildner ein oder mehrere Peroxyester, Diacylperoxide und/oder Azonitrile verwendet werden und die Härtung bei Temperaturen über etwa 80°C initiiert wird.

16. Verwendung einer Zusammensetzung, gemäß Anspruch 1 zur Polymerisation, Copolymerisation, Pfropfpolymerisation und/oder Vernetzung von Polymeren und/oder Copolymeren und/oder beliebigen anderen Monomeren.

17. Verfahren zur Herstellung einer Zusammensetzung in Form einer Lösung aus einer Verbindung mit der Teilstruktur I 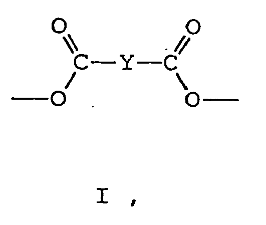 worin Y -HC=CH-, -HC=C(CH₃)- oder -C(=CH₂)-CH₂- ist, und einem oder mehreren Ketonperoxiden, wobei das oder die Ketonperoxide in situ in der Verbindung mit der Teilstruktur I, die als Lösungsmittel dient, durch Umsetzung des oder der entsprechenden Ketone gebildet wird/werden, wobei als Verbindungen mit der Teilstruktur I ausgenommen sind monomere Dialkylester der Malein- bzw. Fumarsäure mit 1 bis 20 C-Atomen im Alkylrest und Polyalkylenether mit 1 oder 2 endständigen Maleinsäure- und/oder Fumarsäuregruppen und einem Molekulargewicht von 6500 bis 25000, wobei die endständige(n) Carbonsäuregruppe(n) gegebenenfalls mit C₁₋₈-Alkyl verestert sein kann/können.

## Claims

1. Composition in the form of a solution, which composition comprises
at least one free-radical former and,
as solvent, at least one compound having the partial structure I 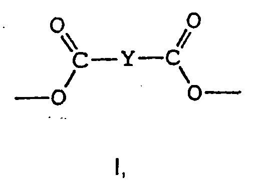 wherein Y is -HC=CH-, -HC=C(CH₃)- or -C(=CH₂)-CH₂-,
**characterised in that** the free-radical former has a 10-hour half-life temperature of below +74°C and/or is a ketone peroxide, and **in that** the composition does not contain vinyl compounds or α-substituted vinyl compounds having the general formula II
CH₂=CR¹R² II
wherein R¹ and R² are each independently of the other hydrogen or any organic radical that, in the presence of the free-radical former(s) present in the composition, react, at a temperature of up to approximately 70°C and a pressure of approximately 1013 mbar, with the compound(s) present in the composition having the partial structure I to form a cured polyester resin or a copolymer, there being excluded, as compounds having the partial structure I, monomeric dialkyl esters of maleic and fumaric acid having from 1 to 20 carbon atoms in the alkyl radical and polyalkylene ethers having 1 or 2 terminal maleic acid and/or fumaric acid groups and a molecular weight of from 6500 to 25 000 wherein the terminal carboxylic group(s) may optionally be esterified with C₁₋₈alkyl.

2. Composition according to claim 1, **characterised in that** the compound having the partial structure I is an unsaturated oligo- or poly-ester that is liquid at 25°C and 1013 mbar, which can be prepared by condensation of maleic acid, fumaric acid, itaconic acid and/or citraconic acid with one or more diols of formula III 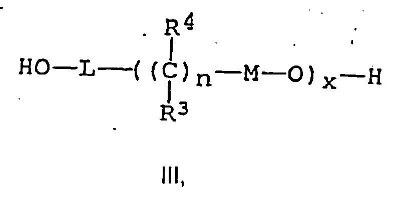 wherein n is from 1 to 10, x is from 1 to 100, R³ and R⁴ are each independently of the other H or alkyl having from 1 to 10 carbon atoms and L and M are each independently of the other a bond or arylene,
or by condensation of maleic acid, fumaric acid, itaconic acid and/or citraconic acid and of one or more alkyl-, aryl- and arylalkyl-dicarboxylic acids with one or more diols of formula III.

3. Composition according to either claim 1 or 2, **characterised in that** the composition furthermore contains a stabilising agent, especially 2,6-di-tert.-butyl-4-methylphenol or 4-nonylphenol, preferably in a concentration of from 0.01 to 10 % by weight based on the total composition, and, optionally, other customary additives.

4. Composition according to any one of claims 1 to 3, **characterised in that** the free-radical former(s) are one or more ketone peroxides, preferably one or more methyl ethyl ketone peroxides, methyl isobutyl ketone peroxides, cyclohexanone peroxides, acetylacetone peroxides or 3-methyl-3-hydroxy-5-oxo-1,2-dioxycyclopentanes, the peroxy ester tert.-butyl peroxy-2-ethylhexanoate and/or the diacyl peroxide bis-benzoyl peroxide.

5. Composition according to any one of claims 1 to 3, **characterised in that** the free-radical former(s) are one or more azonitriles.

6. Composition according to claim 4, **characterised in that** the active oxygen content of the composition is from 0.5 to 9 %, especially from 0.5 to 1 %.

7. Use of one or more compounds having the partial structure I 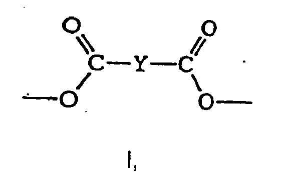 wherein Y is -HC=CH-, -HC=C(CH₃)- or -C(=CH₂)-CH₂-,
as a solvent for the storage and/or transport of one or more free-radical formers, there being excluded, as compounds having the partial structure I, monomeric dialkyl esters of maleic and fumaric acid having from 1 to 20 carbon atoms in the alkyl radical and polyalkylene ethers having 1 or 2 terminal maleic acid and/or fumaric acid groups and a molecular weight of from 6500 to 25 000 wherein the terminal carboxylic group(s) may optionally be esterified with C₁₋₈alkyl.

8. Use according to claim 7, **characterised in that** the compound having the partial structure I is an unsaturated oligo- or poly-ester that is liquid at 25°C and 1013 mbar, which can be prepared by condensation of maleic acid, fumaric acid, itaconic acid and/or citraconic acid with one or more diols of formula III 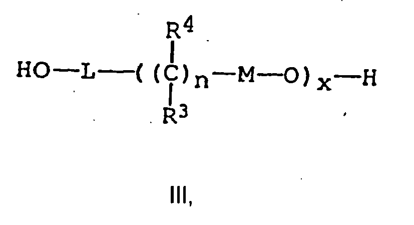 wherein n is from 1 to 10, x is from 1 to 100, R³ and R⁴ are each independently of the other H or alkyl having from 1 to 10 carbon atoms and L and M are each independently of the other a bond or arylene, or by condensation of maleic acid, fumaric acid, itaconic acid and/or citraconic acid with one or more alkyl-, aryl- and arylalkyl-dicarboxylic acids and one or more diols of formula III.

9. Use according to either claim 7 or claim 8, **characterised in that** the free-radical former(s) are one or more ketone peroxides, peroxy esters, dialkyl peroxides, including diaralkyl peroxides, alkyl hydroperoxides, including aralkyl hydroperoxides, diacyl peroxides, peroxy ketals, azonitriles and/or azoalkanes.

10. Use according to claim 9, wherein the active oxygen content of the ketone peroxide(s) peroxy ester(s), dialkyl peroxide(s), alkyl hydroperoxide(s), diacyl peroxide(s) and/or peroxyketal(s) is from 0.5 to 9 %, especially from 0.5 to 1 %.

11. Use of a composition according to claim 1 for curing unsaturated polyester resins.

12. Use according to claim 11, **characterised in that** the compound(s) present in the composition used having the partial structure I and the unsaturated polyester present in the unsaturated polyester resin have identical structural units.

13. Use of a composition according to claim 11 or 12, **characterised in that** the free-radical initiator(s) used are one or more ketone peroxides and the curing is initiated at from 10 to 40°C, optionally in the presence of one or more metal accelerators.

14. Use according to claim 13, **characterised in that** the metal accelerator is vanadium octoate, iron octoate, copper octoate or cobalt octoate or cobalt naphthenate.

15. Use of a composition according to claim 11 or 12, **characterised in that** the free-radical former(s) used are one or more peroxy esters, diacyl peroxides and/or azonitriles, and the curing is initiated at temperatures in excess of about 80°C.

16. Use of a composition according to claim 1 for the polymerisation, copolymerisation, graft polymerisation and/or crosslinking of polymers and/or copolymers and/or any other monomers.

17. Process for the preparation of a composition, in the form of a solution, from a compound having the partial structure I 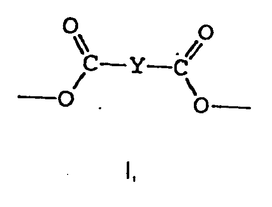 wherein Y is -HC=CH-, -HC=C(CH₃)- or -C(=CH₂)-CH₂-, and one or more ketone peroxides, wherein the ketone peroxide(s) are formed *in situ* in the compound having the partial structure I, which acts as solvent, by reaction of the corresponding ketone(s), there being excluded, as compounds having the partial structure I, monomeric dialkyl esters of maleic and fumaric acid having from 1 to 20 carbon atoms in the alkyl radical and polyalkylene ethers having 1 or 2 terminal maleic acid and/or fumaric acid groups and a molecular weight of from 6500 to 25 000 wherein the terminal carboxylic group(s) may optionally be esterified with C₁₋₈alkyl.

## Revendications

1. Composition, sous la forme d'une solution qui contient au moins un générateur de radicaux libres et au moins un composé en tant que solvant, présentant la structure partielle I : 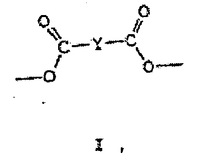 dans laquelle Y est -HC=CH-, -HC=C(CH₃)- ou - C(=CH₂)-CH₂-, **caractérisée en ce que** le générateur de radicaux libres présente une température de demi-vie de 10 heures inférieure à + 74° C et/ou est un cétone-peroxyde, et que la composition ne contient pas de composés vinyliques substitués par un élément vinylique
ou α, de formule II générale suivante :
CH₂=CR¹R², II
dans laquelle R¹ et R³ indépendamment l'un de l'autre sont un atome d'hydrogène ou un radical organique quelconque, qui réagissent en présence du générateur du ou des radicaux libres contenu(s) dans la composition, à une température allant jusqu'à environ 70° C et à une pression d'environ 1013 bar avec le ou les composé(s) de structure partielle I contenu(s) dans la composition, pour donner une résine de polyester durcie ou un copolymère, sachant que l'on exclut comme composés de structure partielle I, les dialkylesters monomères de l'acide maléique ou fumarique comportant 1 à 20 atomes de carbone dans le radical alkyle et des polyalkylène-éthers comportant 1 ou 2 groupes d'acide maléique et/ou acide fumarique en position terminale et présentant un poids moléculaire de 6 500 à 25 000, le/les groupe(s) d'acide carboxylique terminaux pouvant être estérifiés éventuellement avec un groupe alkyle en C₁ à C₈.

2. Composition selon la revendication 1, **caractérisée en ce que** le composé présentant la structure partielle I est un oligo-ester ou polyester liquide insaturé à 25° C et à 1013 mbar qui peut être produit par la condensation d'acide maléique, d'acide fumarique, d'acide itaconique et/ou d'acide citraconique avec un ou plusieurs diols de formule III : 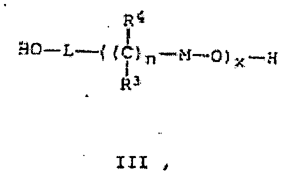 dans laquelle n vaut de 1 à 10, x vaut de 1 à 100, R³ et R⁴ indépendamment l'un de l'autre sont un atome d'hydrogène ou un groupe alkyle comportant 1 à 10 atomes de carbone et L et M, indépendamment l'un de l'autre, sont une liaison ou des groupes aryles,
ou par condensation d'acide maléique, d'acide fumarique, d'acide itaconique et/ou d'acide citraconique d'un ou de plusieurs acides alkyl-, aryl- et arylalkyl-dicarboxylique comportant un ou plusieurs diols de formule III.

3. Composition selon l'une des revendications 1 ou 2, **caractérisée en ce que** la composition comprend en outre un agent stabilisant, en particulier le 2,6-di-tert-butyl-4-méthylphénol ou le 4-nonylphénol, de préférence en une concentration de 0,01 à 10 % en poids, par rapport à la composition totale et éventuellement d'autres additifs habituels.

4. Composition selon l'une des revendications 1 à 3, **caractérisée en ce que** le ou les générateurs de radicaux libres sont un ou plusieurs peroxyde(s) de cétone, de préférence un ou plusieurs peroxyde de méthyl-éthylcétone, peroxyde de méthyl-isobutylcétone, peroxyde de cyclohexanone, peroxyde d'acétylacétone ou 3-méthyl-3-hydroxy-5-oxo-1,2-dioxycyclopentane, le peroxyester t-butyl-peroxy-2-éthyl-hexanoate et/ou le diacyl-peroxyde bis-benzoylperoxyde.

5. Composition selon l'une des revendications 1 à 3, **caractérisée en ce que** le ou les générateurs de radicaux libres sont un ou plusieurs azonitriles.

6. Composition selon la revendication 4, **caractérisée en ce que** la teneur en oxygène actif de la composition est de 0,5 à 9 %, en particulier 0,5 à 1 %.

7. Utilisation d'un ou plusieurs composés de structure partielle I : 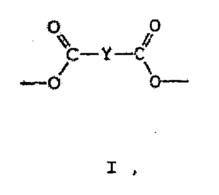 dans laquelle Y est -HC=CH-, -HC=C(CH₃)- ou - C(=CH₂)-CH₂-, comme solvant pour le stockage et/ou le transport d'un ou de plusieurs générateurs de radicaux libres, sachant que l'on exclut comme composés de structure partielle I, les dialkylesters monomères de l'acide maléique ou fumarique comportant 1 à 20 atomes de carbone dans le radical alkyle et des polyalkylène-éthers comportant 1 ou 2 groupes d'acide maléique et/ou acide fumarique en position terminale et présentant un poids moléculaire de 6 500 à 25 000, le/les groupe(s) d'acide carboxylique terminaux pouvant être estérifiés éventuellement avec un groupe alkyle en C₁ à C₈.

8. Utilisation selon la revendication 7, **caractérisé en ce que** le composé de structure partielle I est un oligo-ester ou poly-ester liquide insaturé à 25° C et à 1013 mbar qui peut être produit par la condensation d'acide maléique, d'acide fumarique, d'acide itaconique et/ou d'acide citraconique avec un ou plusieurs diols de formule III : 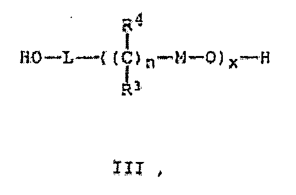 dans laquelle n vaut de 1 à 10, x vaut de 1 à 100, R³ et R⁴ indépendamment l'un de l'autre sont un atome d'hydrogène ou un groupe alkyle comportant 1 à 10 atomes de carbone et L et M, indépendamment l'un de l'autre, sont une liaison ou des groupes aryles,
ou par condensation d'acide maléique, d'acide fumarique, d'acide itaconique et/ou d'acide citraconique d'un ou de plusieurs acides alkyl-, aryl- et arylalkyl-dicarboxylique comportant un ou plusieurs diols de formule III.

9. Utilisation selon l'une des revendications 7 ou 8, **caractérisée en ce que** le ou les générateurs de radicaux libres sont un ou plusieurs peroxyde de cétone, peroxyester, dialyl-peroxyde, comprenant le peroxyde de diaralkyle, l'alkylhydroperoxyde, y compris l'aralkylhydroperoxyde, le dialcylperoxyde, le peroxycétal, l'azonitrile et/ou l'azoalcane.

10. Utilisation selon la revendication 9, dans laquelle la teneur en oxygène actif du/des peroxyde(s) de cétone, peroxyester, dialyl-peroxyde, alkylhydroperoxyde, dialcylperoxyde et/ou peroxycétal est de 0,5 à 9 %, en particulier de 0,5 à 1 %.

11. Utilisation d'une composition selon la revendication 1, pour le durcissement de résines de polyester insaturé.

12. Utilisation selon la revendication 11, **caractérisée en ce que** le/les composé(s) de structure partielle I contenu(s) dans la composition utilisée et le polyester insaturé contenu dans la résine de polyester insaturé présentent les mêmes motifs structuraux.

13. Utilisation d'une composition selon la revendication 11 ou 12, **caractérisée en ce que** le ou les générateurs de radicaux libres utilisés sont un ou plusieurs peroxydes de cétone et le durcissement est initié de 10 à 40° C, éventuellement en présence d'un ou de plusieurs accélérateurs métalliques.

14. Utilisation selon la revendication 13, **caractérisée en ce que** l'accélérateur métallique est l'octoate de vanadium, de fer, de cuivre ou de cobalt ou le naphténate de cobalt.

15. Utilisation d'une composition selon la revendication 11 ou 12, **caractérisée en ce que** l'on utilise comme le ou les générateurs de radicaux libres, un ou plusieurs peroxyesters, diacylperoxydes et/ou azonitriles et le durcissement est initié à une température supérieure à environ 80° C.

16. Utilisation d'une composition selon la revendication 1, pour la polymérisation, la copolymérisation, la polymérisation par greffage et/ou la réticulation de polymères et/ou de copolymères et/ou d'autres monomères quelconques.

17. Procédé de production d'une composition sous la forme d'une solution à base d'un composé de structure partielle I : 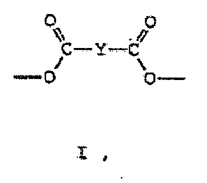 dans laquelle Y est -HC=CH-, -HC=C(CH₃)- ou - C(=CH₂)-CH₂-, et un ou plusieurs peroxydes de cétone, le ou les peroxyde(s) de cétone étant formé(s) in situ dans le composé de structure partielle I qui sert de solvant par transformation de la ou des cétone(s), sachant que l'on exclut comme composés de structure partielle I, les dialkylesters monomères de l'acide maléique ou fumarique comportant 1 à 20 atomes de carbone dans le radical alkyle et les polyalkylène-éthers comportant 1 ou 2 groupes d'acide maléique et/ou acide fumarique en position terminale et présentant un poids moléculaire de 6 500 à 25 000, le/les groupe(s) d'acide carboxylique terminaux pouvant être estérifiés éventuellement avec un groupe alkyle en C₁ à C₈.
